## Europäisches Patentamt
## European Patent Office
## Office européen des brevets

(11) Numéro de publication: **0 034 119**
**B1**

(12) **FASCICULE DE BREVET EUROPEEN**

(45) Date de publication du fascicule du brevet:
**01.02.84**

(21) Numéro de dépôt: **81810032.3**

(22) Date de dépôt: **04.02.81**

(51) Int. Cl.³: **A 46 B 13/06**

(54) **Brosse à dents à entraînement mécanique.**

(30) Priorite: **06.02.80 CH 938/80**

(43) Date de publication de la demande:
**19.08.81 Bulletin 81/33**

(45) Mention de la délivrance du brevet:
**01.02.84 Bulletin 84/5**

(84) Etats contractants désignés:
**AT BE CH DE FR GB IT LI LU NL SE**

(56) Documents cités:
**CA - A - 585 047**
**CA - A - 730 840**
**CH - A - 330 380**
**DE - A - 2 016 984**
**DE - A - 2 433 925**
**FR - A - 840 476**
**FR - A - 1 414 679**
**FR - A - 1 589 619**
**GB - A - 2 038 618**
**LU - A - 79 550**
**US - A - 3 214 775**
**US - A - 3 753 435**
**US - A - 3 869 746**
**US - A - 4 175 299**
**US - A - 4 177 532**

(73) Titulaire: **Charles KAESER S.A., 18, chemin de Rennier, CH-1009 Pully (CH)**

(72) Inventeur: **Kaeser, Charles, 18, chemin de Rennier, CH-1009 Pully (CH)**

(74) Mandataire: **Nithardt, Roland, CABINET ROLAND NITHARDT Rue Edouard Verdan 15, CH-1400 Yverdon (CH)**

BUNDESDRUCKEREI BERLIN

## Brosse à dents à entraînement mécanique

La présente invention concerne une brosse à dents à entraînement mécanique, comportant une série de poils incrustés dans un support mobile et constituant une brosse amovible, un mécanisme susceptible d'engendrer un pivotement alternatif de ladite brosse, ce mécanisme comportant une turbine hydraulique miniature du type Pelleton rotative autour de son axe et logée dans une cavité sensiblement cylindrique, un conduit d'amenée d'eau sous pression et débouchant tangentiellement dans ladite cavité étant prévu pour assurer l'entraînement de la turbine.

On connaît déjà les brosses à dents dites électriques qui comportent un corps dans lequel est logé un petit moteur électrique, entraînant un mécanisme agencé pour transformer le mouvement circulaire de l'axe du moteur en un mouvement pivotant alternatif appliqué à la brosse proprement dite.

Ces appareils nécessitent une prise de courant placée dans la salle de bain, à procimité d'un lavabo. Suite aux nombreux accidents par électrocution qui se produisent chaque année, certains pays ont légiféré dans le sens d'une interdiction absolue de placer une prise de courant dans une salle de bain. En conséquence, l'utilisation de ce type de brosses à dents deviendra plus problématique.

En outre, la présence d'un moteur électrique et de son cordon d'alimentation dans un appareil, qu'on est sensé introduire dans sa bouche et sous un jet d'eau, n'est pas rassurante pour l'utilisateur averti des dangers que cela représente.

Différentes tentatives ont été faite en vue de mettre au point des brosses à dents entraînées par la force motrice de l'eau sous pression. Le brevet US-A-3 214 775 décrit une brosse à dents pivotante, entraînée par une petite turbine logée dans le corps de l'appareil. La tige de la brosse est directement liée à la turbine et comporte une fente axiale à l'intérieur de laquelle est engagé un téton solidaire du boîtier contenant le mécanisme d'entraînement. Ce mécanisme engendre un mouvement de va-et-vient de la brosse dans le sens de son axe et un mouvement de pivotement de cette brosse autour du téton fixe dont l'axe est perpendiculaire à l'axe de la brosse.

Le brevet US-A-4 177 532 décrit une brosse rotative entraînée par une turbine hydraulique. Un mécanisme à engrenage permet de transmettre la rotation de la turbine à l'axe de la brosse.

Le brevet CA-A-730 840 décrit une brosse à dents équipée d'une turbine entraînée en rotation par de l'eau sous pression. Un mécanisme comportant un excentrique et une biellette de transmission est couplé à la tige de la brosse qui est soumise à un mouvement de pivotement alternatif.

Tous ces appareils connus ne permettent pas de projeter de l'eau sous forme de jets pulsés et notamment de combiner les aventages d'une brosse à dents mécanique et d'un appareil à jets d'eau pulsés.

La présente invention se propose de remédier à ces inconvénients en réalisant une brosse à dents entraînée par des moyens ne nécessitant pas l'énergie électrique, mais suffisamment efficaces pour assurer un entraînement mécanique de la brosse, et une brosse à dents mécanique combinant les avantages d'une brosse à dents et ceux d'un appareil à jets d'eau pulsés.

Dans ce but, la présente invention est caractérisée en ce que le mécanisme susceptible d'engendrer un mouvement de pivotement alternatif de la brosse comporte un organe de forme sphérique librement rotatif autour d'un axe disposé fixement et excentriquement sur une pièce fixée rigidement à la turbine coaxialement par rapport à elle, et une pièce pivotante comportant à la fois deux branches parallèles entre elles, agencées pour prendre appui respectivement sur l'organe sphérique en deux points diamétralement opposés, et un support reliant ces deux branches à la fois entre elles et à une extrémité d'une tige agencée pour recevoir la brosse amovible, la pièce pivotante composée des branches parallèles et du support formant avec la tige une manivelle susceptible de transmettre son mouvement de pivotement à la brosse amovible.

La présente invention sera mieux comprise en référence à la description d'exemples de réalisation donnés à titre d'exemples et du dessin annexé, dans lequel:

La figure 1 représente une vue partielle en perspective du corps d'une brosse à dents contenant un dispositif de transformation du mouvement rotatif de la turbine en un mouvement alternatif,

la figure 2 est une vue en perspective représentant le dispositif mécanique logé dans le corps de la fig. 1, et

la figure 3 est une vue en coupe partielle d'une autre forme de réalisation de la brosse à dents couplée avec un dispositif à jets d'eau pulsés.

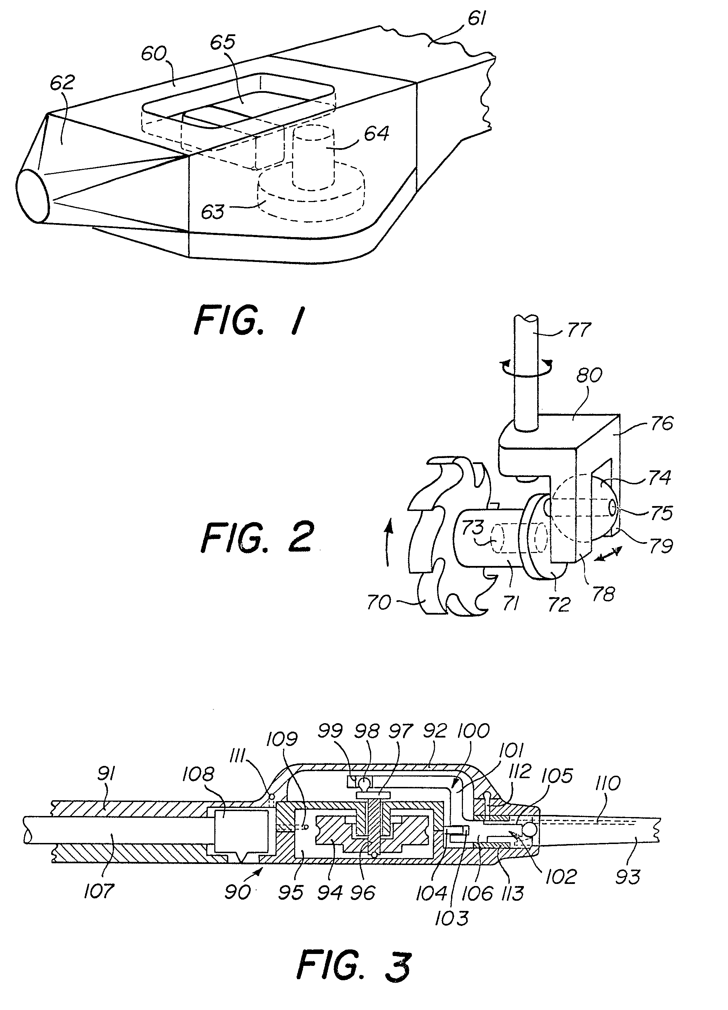

Les fig. 1 et 2 représentent respectivement le corps et le mécanisme d'une forme de réalisation d'une brosse à dents à entraînement mécanique. La particularité de ce mécanisme réside dans le fait que la tige allongée est sensiblement parallèle au plan de la turbine. Cette solution permet de réaliser un corps relativement compact à peine plus volumineux que la poignée. Le corps, destiné à loger le mécanisme de la fig. 2, se compose d'une renflement 60 disposé à l'éxtrémité supérieure de la poignée 61 (partiellement représentée) et à l'extrémité inférieure d'un cône 62, destiné à supporter la tige allongée dans laquelle est incrustée la brosse proprement dite. Un évidement sensiblement cylindrique 63 constitue la cavité dans laquelle est logée la turbine, l'axe de la turbine est logé dans la cavité cylindrique 64 qui relie la cavité 63 avec une cavité sensiblement rectangulaire 65, prévue pour contenir la pièce qui transforme effectivement le mouvement rotatif de la turbine en un mouvement de pivotement de la brosse.

En référence à la fig. 2, le dispositif mécanique de transformation du mouvement se compose essentiellement de la turbine 70, d'un arbre rotatif 71 solidaire de la turbine, d'un disque 72 centré sur l'arbre 71 et fixé au moyen d'une goupille ou vis 73, d'une bille 74 montée de façon excentrée sur le disque 72 au moyen d'une goupille 75 ou de tout autre moyen approprié, et d'une pièce pivotable 76 montées à l'extrémité inférieure de la tige 77, raccordée à la tige allongée (non représentée) qui porte, à son extrémité supérieure, la brosse proprement dite. La pièce pivotable 76 comporte deux branches parallèles 78 et 79 qui sont constamment en appui sur la bille 74 en deux points sensiblement diamétralement opposés. Les deux branches 78 et 79 sont parallèles à la tige 77, mais cette dernière ne se trouve pas dans le plan défini par les deux branches. De cette manière, à chaque rotation de la turbine, la bille 74 décrit une trajectoire circulaire au cours de laquelle elle pousse alternativement les branches 78 et 79 vers la droite et vers la gauche. Ce mouvement provoque le pivotement du support 80 autour de l'axe de la tige 77, qui est également pivotée alternativement de la droite vers la gauche.

En référence à la fig. 3, la brosse à dents décrite comporte un corps 90 constitué de deux parties principales: un manchon 91 ou poignée et un boîtier 92 solidaire du manchon 91 et contenant le mécanisme d'entraînement d'une brosse à dents 93 partiellement représentée. Le mécanisme d'entraînement se compose d'une turbine Pelleton miniature 94, logée dans une cavité 95 et solidaire d'un arbre rotatif 96. L'extrémité supérieure de l'arbre 96 porte un disque 97 sur lequel est montée excentriquement une bille 98. Le disque 97 et la bille 98 correspondent respectivement au disque 72 et à la bille 74 de la fig. 2. La bille 98 est logée dans un évidement 99 carré, dont les côtes ont sensiblement la même longueur que le diamètre de la bille 98 et que est ménagé dans une biellette 100 coudée. La biellette 100 correspond à la pièce 76 de la fig. 2, avec toutefois la différence que dans la variante illustrée par la fig. 2, l'évidement dans lequel est logée la bille 74 est ouvert à une extrémité. Ceci a pour conséquence que la rotation du disque 72 engendre un mouvement de pivotement alternatif de la tige 77. Par contre, le fait que la bille 98 soit en appui sur les quatre côtés de l'évidement 99 engendre à la fois un mouvement de pivotement alternatif (identique à celui engendré par le mécanisme de la fig. 2) et un mouvement de déplacement axial alternatif de la biellette 100. Ce mouvement se transmet par l'intermédiaire de la partie coudée 101, à la pièce d'extrémité 102 solidaire de la tige de la brosse à dents 93. Un évidement 103, ménagé axialement dans la pièce d'extrémité 102, permet de loger une goupille de guidage fixe 104.

La pièce d'extrémité 102 comporte une zone antérieure 105 de diamètre réduit et une zone postérieure 106 de diamètre élargi. Cet agencement fonctionne à la manière d'un piston. En effet, l'eau sous pression, amenée par le conduit 107, est destinée, selon la fonction du commutateur 108, à alimenter la turbine 94 par le conduit 109, ou la canule 110 ménagée dans la tige de la brosse à dents, par le conduit 111—112. Le conduit 112 débouche dans la partie du corps où se trouve logée la pièce d'extrémité 102 de la biellette 100, et est alternativement ouvert et obturé par le coulissement axial de cette pièce 102 dans le manchon annulaire 113. Ce dispositif permet d'obtenir une surpression importante qui engendre un jet pulsé à la sortie de la canule 110.

De ce fait, la brosse à dents décrite peut être utilisée soit comme brosse à dents mécanique simple, soit comme appareil à jets pulsés en remplaçant la brosse 93 par un gicleur, soit comme un dispositif combinant ces deux appareils.

Bien entendu, le même résultat pourrait être obtenu avec le mécanisme illustré par la fig. 2. Il suffirait de fermer le quatrième côte de l'évidement dans lequel est logée la bille 74 pour que la tige 77 soit entraînée selon deux mouvements combinés: un pivotement alternatif autour de l'axe de la tige et une translation axiale alternative.

**Revendications**

1. Brosse à dents à entraînement mécanique, comportant une série de poils incrustés dans un support mobile et constituant une brosse amovible, un mécanisme susceptible d'engendrer un pivotement alternatif de ladite brosse, ce mécanisme comportant une turbine hydraulique miniature du type Pelleton (70, 94) rotative autour de son axe et logée dans une cavité (63) sensiblement cylindrique, un conduit d'amenée d'eau sous pression et débouchant tangentiellement dans ladite cavité étant prévu pour assurer l'entraînement de la turbine, caractérisée en ce que le mécanisme susceptible d'engendrer un mouvement de pivotement alternatif de la brosse comporte un organe de forme sphérique (74, 98) librement rotatif autour d'un axe (75) disposé fixement et excentriquement sur une pièce (72, 97) fixée rigidement à la turbine (70, 94) coaxialement par rapport à elle, et une pièce pivotante (76, 100) comportant à la fois deux branches (78, 79) parallèles entre elles, agencées pour prendre appui respectivement sur l'organe sphérique (74, 98) en deux points diamétralement opposés, et un support (80, 101) reliant ces deux branches à la fois entre elles et à une extrémité d'une tige (77, 102) agencée pour recevoir la brosse amovible, la pièce pirotante (76, 102) composée des branches parallèles (78, 79) et du support (80, 101) formant avec la tige (77, 102) une manivelle susceptible de transmettre son mouvement de pivotement à la brosse amovible.

2. Brosse à dents selon la revendication 1, dans laquelle le mécanisme d'entraînement de la brosse amovible est agencé pour engendrer simultanément un mouvement de pivotement et un mouvement de va-et-vient, caractérisée en ce que la pièce pivotante ou biellette (100) en forme de manivelle a son extrémitée manoluvrée par l'organe sphérique (98), qui comporte un evidement carré (99) dans lequel est engagé le dit organe sphérique ou bille (98) monté excentriquement sur une pièce rotative (97) entraînée en rotation par la turbine (94), et que son autre extrémité (102) est agencée pour recevoir la tige de la brosse amovible (93).

3. Brosse à dents selon la revendication 2, caractérisée en ce que ledit autre d'extrémité (102) comporte un secteur antérieur de diamètre réduit (105) et un secteur postérieur (106) de diamètre plus grand, et en ce que cette extrémité (102) est agencée pour coulisser dans une chambre du corps logeant le mécanisme de la brosse, chambre qui communique avec une canule (110) ménagée dans la tige (93) de la brosse amovible, un conduit (112) étant prévu pour amener de l'eau dans ladite chambre, et l'orifice du conduit (112) étant ménagé dans la paroi de la chambre de telle manière qu'il soit alternativement obturé par ledit secteur postérieur (106) de l'extrémité (102), de telle manière qu'à chaque cycle du mouvement de va-et-vient de cette extrémité (102) ladite chambre se remplisse d'eau s'écoulant à travers l'orifice du conduit (112) et que le volume d'eau introduit soit ensuite éjecté à travers la canule (110) lorsque le déplacement du secteur de diamètre plus grand (105) engendre une diminution du volume utile de la chambre et obture l'orifice du conduit (112).

4. Brosse à dents selon l'une quelconque des revendications 2 ou 3, caractérisée en ce que l'extrémité antérieure de l'extrémité (102) comporte un bossage adapté pour permettre la fixation par emboîtage de la tige de la brosse amovible et/ou d'un gicleur à jet d'eau pulsé.

## Patentansprüche

1. Mechanisch angetriebene Zahnbürste, bestehend aus einer Reihe von in einem beweglichen Träger eingesetzten und eine abnehmbare Bürste bildenden Borsten, einem Mechanismus zur Erzeugung von Drehschwingungen der Bürste um ihre Achse, welcher Mechanismus eine um ihre Achse drehende und in einem im wesentlichen zylindrischen Hohlraum (63) untergebrachte hydraulische Miniaturturbine (70, 94) des Peltontyps umfaßt, und aus einer Druckwasser führenden und tangential in den besagten Hohlraum mündenden Leitung zur Sicherung des Turbinenantriebes, dadurch gekennzeichnet, daß der Mechanismus zur Erzeugung von Drehschwingungen der Bürste um ihre Achse ein kugelförmiges, um eine Achse (75), die fest und exzentrisch auf einem starr und konzentrisch zur Turbine (70, 94) befestigten Stück (72, 97) angeordnet ist, frei drehbares Organ (74, 98) und ein um seine Achse schwenkbares Stück (76, 100) aufweist, das gemeinsam aus zwei zueinander parallelen, zur beidseitigen Abstützung an dem Organ (74, 98) an zwei zueinander diametral gegenüberliegenden Punkten dienenden Schenkeln (78, 79) und einem die beiden Schenkel miteinander verbindenden Träger (80, 101) besteht, wobei das an einem Ende eines zur Aufnahme der abnehmbaren Bürste bestimmten Schaftes (77, 102) vorgesehene, sich aus den parallelen Schenkeln (78, 79) und dem Träger (80, 101) zusammensetzende, schwenkbare Stück (76, 100) mit dem Schaft (77, 102) eine zur Übertragung seiner Schwenkbewegung auf die abnehmbare Bürste geeignete Kurbel bildet.

2. Zahnbürste nach Anspruch 1, bei der der Antriebsmechanismus der abnehmbaren Bürste gleichzeitig eine Schwenkbewegung um ihre Achse und eine hin- und hergehende Bewegung erzeugt, dadurch gekennzeichnet, daß das schwenkbare Stück oder ein kleines Pleuel (100) in Kurbelform an seinem durch das kugelförmige Organ (98) bewegten Ende eine viereckige Aussparung (99) enthält, in die das kugelförmige Organ oder ein Kopf (98) eingreift, das bzw. der exzentrisch auf einem durch die Turbine (94) in Drehung versetzten Drehteil (97) montiert ist und daß sein anderes Ende (102) zum Halten des Schaftes der abnehmbaren Bürste (93) dient.

3. Zahnbürste nach Anspruch 2, dadurch gekennzeichnet, daß das besagte andere Ende (102) einen vorderen Abschnitt (105) mit verringertem Durchmesser und einen hinteren Abschnitt (106) mit größerem Durchmesser aufweist, daß dieses Ende (102) in einer Kammer des den Mechanismus der Bürste aufnehmenden Körpers gleitbar lagert, welche Kammer mit einem im Schaft (93) der abnehmbaren Zahnbürste ausgesparten Kanal (110) in Verbindung steht, daß eine Leitung (112) zum Zuführen von Wasser in die besagte Kammer vorgesehen und die Mündung der Leitung in der Kammerwand derart angeordnet ist, daß sie wechselweise durch den hinteren Abschnitt (106) des Endes (102) verschlossen wird, so daß sich bei jedem Zyklus der hin- und hergehenden Bewegung dieses Endes (102) die Kammer mit quer aus der Mündung der Leitung (112) ausfließenden Wasser füllt und das eingebrachte Wasservolumen quer zum Kanal (110) ausgeschleudert wird, wenn die Verlagerung des Abschnittes (106) mit dem größeren Durchmesser eine Verminderung des wirksamen Kammervolumens verursacht und die Mündung der Leitung (112) verschließt.

4. Zahnbürste nach Anspruch 2 oder 3, dadurch gekennzeichnet, daß der Vorderteil des Endes (102) eine Fassung aufweist, die die Einsteck-Befestigung des Schaftes der abnehmbaren Bürste und/oder eines Spritzröhrchens für einen pulsierenden Wasserstrahl erlaubt.

## Claims

1. A mechanically driven toothbrush comprising a series of bristles imbedded in a movable support and constituting a movable brush, a mechanism for generating an alternating pivoting motion of said brush, this mechanism comprising a miniature Pelton hydraulic turbine (70, 94) rotating on its shaft and housed in a substantially cylindrical cavity (63), a pressurized water intake tubing issuing sideways into said cavity being provided for the turbine motion, characterized in that the mechanism for generating an alternating pivoting motion of the brush comprises a spherical element (74, 98) freely rotating around a shaft (75) fixedly and eccentrically disposed on a piece (72, 97) rigidly fixed to the turbine (70, 94) in a coaxial relation, and a pivoting piece (76, 100) comprising at once two parallel arms (78, 79) designed to respectively rest against the eccentric element (74, 98) at two opposite points and a coupling support (80, 101) for these arms and the end of a stem (77, 102) bearing the movable brush, the pivoting piece (76, 100) with the two parallel arms (78, 79) and the support (80, 101) forming with the stem (77, 102) a crank for transmitting its pivoting motion to the movable brush.

2. Toothbrush according to claim 1, in which the drive mechanism of the movable brush provides simultaneously a pivoting motion and a backward and forward motion, characterized in that the pivoting piece or cranktype link (100) having its end actuated by the spherical element (98), comprises a square clearance (99) in which the said spherical element or ball (98) eccentrically mounted on a rotating piece (97) is located, and that its other end (102) is designed to receive the movable toothbrush stem (93).

3. Toothbrush according to claim 2, characterized in that the said other end (102) comprises a forward zone of lesser diameter (105) and a rear zone (106) of larger diameter and in that this end (102) slides in a chamber of the body housing the mechanism of the brush, said chamber communicating with a cannula (110) in the stem (93) of the movable brush, a conduit (112) being provided to lay on water in said chamber, and the orifice of the conduit (112) being provided in the wall of the chamber and so located as to be alternatingly sealed by the rear zone (106) of the end (102) so that to each cycle of backward and forward motion of the end (102), the said chamber is filling with water flowing out through the conduit (112) and that the introduced water may be ejected through the cannula (110) when the moving of the forward zone of larger diameter (106) generates a diminution of the useful volume of the chamber and seals the orifice of the conduit (112).

4. Toothbrush according to claim 2 or 3, characterized in that the forward end of the end (102) comprises a boss designed to fix the stem of the movable toothbrush and/or of a pulse water jet sprayer in an encasing manner.

FIG. 1

FIG. 2

FIG. 3